# EUROPEAN PATENT APPLICATION

(11) **EP 4 765 917 A1**
(43) Date of publication of application: **24.06.2026**
(21) Application number: 23951954.9
(22) Date of filing: 27.09.2023
(51) Int. Cl.: H04W 12/50, H04W 12/71, H04W 12/041

(54) **DEVICE CONNECTION METHOD, TERMINAL, AND STORAGE MEDIUM**

(30) Priority: 15.09.2023 CN 202311200787
(71) Applicant: Questyle Audio Technology Co., Ltd, Shenzhen, Guangdong 518000 (CN)
(72) Inventor: WANG, Fengshuo, Shenzhen, Guangdong 518000 (CN)
(74) Representative: Plavsa, Olga
(86) International application number: PCT/CN2023/122309
(87) International publication number: WO 2025/055027

(57) **Abstract**

The device connection method disclosed in the invention enables an audio transmitting device to generate pairing information according to a first sequence and send the pairing information to an audio receiving device, receive first and second response information from the audio receiving device to complete pairing with the audio receiving device, and then connect to the audio receiving device according to a second sequence. The embodiments of the invention implement pairing and connection with at least one audio receiving device via multiple responses, improving the stability and anti-interference ability of device connection.

## Description

This application is a Continuation of PCT Patent Application No. PCT/CN2023/122309 filed on September 27, 2023, which claims priority of China Patent Application No. 2023112007871 filed on September 15, 2023. The contents of the above-identified applications are incorporated herein by reference.

### TECHNICAL FIELD

The present invention relates to the field of information technology, in particular, to a device connection method, a terminal, and a computer-readable storage medium.

### BACKGROUND

With the development of wireless technologies, traditional technologies such as WIFI, BT, and LE-audio means have become increasingly mature as means of wireless transmission for multi-channel audio. Users are liberated from limitations of wired connections and can enjoy "5.1/7.1" multi-channel music anytime and anywhere, which greatly improve flexibility and convenience in daily life and brings a better auditory entertainment experience. Products adapted to multi-channel audio application scenarios, such as Bluetooth TWS earphones, Bluetooth speakers, WIFI speakers, have emerged on the market. Correspondingly, audio transmission technologies and audio processing algorithms have also advanced. Coupled with excellent audio decoding technologies, these developments provide users with an immersive concert hall-like experience.

However, existing technologies such as WIFI and BT exhibit unsatisfactory performance in transmitting high-sampling, high-fidelity, lossless audio with low latency due to bandwidth constraints. Furthermore, when applied to multi-channel audio transmission, problems including audio data asynchrony, poor anti-interference capability, and excessive latency occur, which adversely affect user experience.

### SUMMARY

Embodiments of the present invention provide a device connection method, a terminal, and a computer-readable storage medium that enable pairing and connection with at least one audio receiving device via multiple responses, thereby improving the stability of device connections. Furthermore, the embodiments ensure non-interference during multi-channel audio transmission and provide strong anti-interference capability.

An embodiment of the invention provides a device connection method applied to an audio transmitting device, comprising steps of: upon entering a pairing mode, setting a preamble as a first sequence, generating pairing information according to the first sequence, and sending the pairing information to an audio receiving device; receiving first response information from the audio receiving device and parsing out a chip ID of the audio receiving device from the first response information; generating a key according to the chip ID of the audio receiving device and sending the key to the audio receiving device; receiving second response information returned by the audio receiving device, and completing pairing with the audio receiving device according to the second response information; setting the preamble as a second sequence, and establishing a connection with the audio receiving device based on the second sequence.

An embodiment of the invention also provides a device connection method applied to an audio receiving device, includes steps of: upon entering a pairing mode, receiving pairing information from an audio transmitting device, generating first response information according to the pairing information and a chip ID of the audio receiving device, and returning the first response information to the audio transmitting device; receiving a key from the audio transmitting device, generating second response information according to the key, and returning the second response information to complete pairing with the audio transmitting device; receiving connection information from the audio transmitting device and parsing the connection information; and connecting to the audio transmitting device according to a parsing result and receiving audio data via the second audio channel allocated by the audio transmitting device.

Embodiments of the invention further provide a multi-channel reception synchronization method, applied to a multi-channel reception synchronization system. The multi-channel reception synchronization system transmits audio data via one audio transmitting device, and a plurality of audio receiving devices receive audio data sequentially from respective allocated audio channels according to allocated channel numbers of the allocated audio channels, the multi-channel reception synchronization method includes steps of: when connecting to the audio receiving devices, the audio transmitting device allocates channel numbers of the audio channels to the audio receiving devices in the order of connection, and after the connection is completed, transmit audio data via each audio channel to the audio receiving devices according to the channel numbers of the audio channels; the audio transmitting device transmits connection information to paired audio receiving devices that are not powered on or not connected to the audio transmitting device, and waits for connection establishment; after the paired audio receiving device is powered on and connected to the audio transmitting device, the audio transmitting device transmits the audio data of the corresponding audio channel to the audio receiving device according to the channel number of the audio channel allocated during connection, thereby realizing dynamic allocation of channel numbers of the audio channels and synchronous reception processing of multi-channel audio data.

An embodiment of the invention also provides a terminal, comprising: a memory and a processor, wherein the memory stores an application processing program, the application processing program is executed by the processor to perform the steps of any device connection method provided by the embodiments of the invention.

An embodiment of the invention also provides a computer-readable storage medium, the computer-readable storage medium is configured to store program instructions, the program instructions are executed by a processor to perform the steps of any device connection method provided by the embodiments of the invention.

The device connection method provided by the embodiments of the invention enables the audio transmitting device to enter a pairing mode, set a preamble as a first sequence, generate pairing information based on the first sequence and send the pairing information to an audio receiving device, receive first response information from the audio receiving device, parse out the chip ID of the audio receiving device from the first response information, generate a key based on the chip ID of the audio receiving device and send the key to the audio receiving device, receive second response information from the audio receiving device, complete pairing with the audio receiving device based on the second response information, set the preamble as the second sequence, and connect to the audio receiving device by using the second sequence. The solution provided by the embodiments of the invention realizes pairing and connection with at least one audio receiving device via the plurality of responses. After the plurality of audio receiving devices are connected, the plurality of audio receiving devices can receive audio data from respective second audio channels sequentially according to channel numbers of the second audio channels allocated by the audio transmitting device, thereby improving the stability of device connection. Furthermore, in multi-channel audio transmission, the audio data is transmitted synchronously without mutual interference, thereby achieving strong anti-interference capability.

### BRIEF DESCRIPTION OF THE DRAWINGS

To more clearly illustrate the technical solutions in the embodiments of the invention, the following briefly introduces the accompanying drawings used in the description of the embodiments. It is evident that the accompanying drawings in the following description are merely some embodiments of the invention, and for those skilled in the art, other drawings can be obtained based on these drawings without creative effort.
FIG. 1 is a first schematic flowchart of a device connection method according to an embodiment of the invention;
FIG. 2 is a schematic diagram of a pairing process between a master device and a slave device according to an embodiment of the invention;
FIG. 3 is a schematic diagram of a connection process between a master device and a slave device according to an embodiment of the invention;
FIG. 4 is a second schematic flowchart of a device connection method according to an embodiment of the invention;
FIG. 5 is a schematic structural diagram of a device connection module according to an embodiment of the invention;
FIG. 6 is a schematic structural diagram of a terminal according to an embodiment of the invention.

### DETAILED DESCRIPTION OF THE EMBODIMENTS

Detailed exemplary embodiments will be described below with reference to the accompanying drawings. Unless otherwise specified, the same numerals in different drawings represent the same or similar elements. The exemplary embodiments set forth below are merely examples consistent with the invention, and do not represent all implementations consistent with the invention. Rather, they are merely examples of apparatuses and methods consistent with at least some aspects of the invention, as recited in the appended claims.

It should be noted that, as used herein, the terms "include," "comprise," or any other variations thereof are intended to cover non-exclusive inclusions, such that a process, method, article, or apparatus that comprises a list of elements includes not only those elements but also other elements not expressly listed or inherent to such process, method, article, or apparatus. Without further limitation, an element defined by the phrase "comprising a.." does not preclude the presence of additional identical elements in the process, method, article, or apparatus that comprises the element. Furthermore, components, features, or elements bearing the same names in different embodiments of the invention may have the same or different meanings, the specific meanings of which shall be determined according to their definitions in the respective embodiments or further in combination with the context of such specific embodiments.

It should be understood that, although the steps in the flowcharts of embodiments of the invention are shown in sequence as indicated by the arrows, these steps are not necessarily performed in the order indicated by the arrows. Unless explicitly stated otherwise herein, the execution of these steps is not strictly limited to the illustrated order, and they may be performed in other sequences. Furthermore, at least some of the steps in the figures may include multiple sub-steps or stages that are not necessarily executed concurrently, but may be performed at different times. The execution order of such sub-steps or stages is not necessarily sequential, and they may be performed alternately or concurrently with other steps or with sub-steps or stages of other steps.

It should be noted that step codes such as 101 and 102 are used herein for more clearer and more concise description only, and do not impose substantive limitations on the execution order. Those skilled in the art may perform step 102 prior to step 101 in actual implementation, and such variations shall fall within the protection scope of this invention.

It should be noted that, the term of "embodiments" as used herein, indicates that specific features, structures, or characteristics described in connection with the embodiments may be included in at least one embodiment of the invention. The appearance of this phrase in various places in the specification does not necessarily refer to the same embodiment, nor to separate or alternative embodiments mutually exclusive of other embodiments. It will be appreciated by those skilled in the art that the embodiments described herein may be combined with other embodiments.

Embodiments of the invention provide a device connection method, which may be executed by an audio transmitting device according to embodiments of the invention.

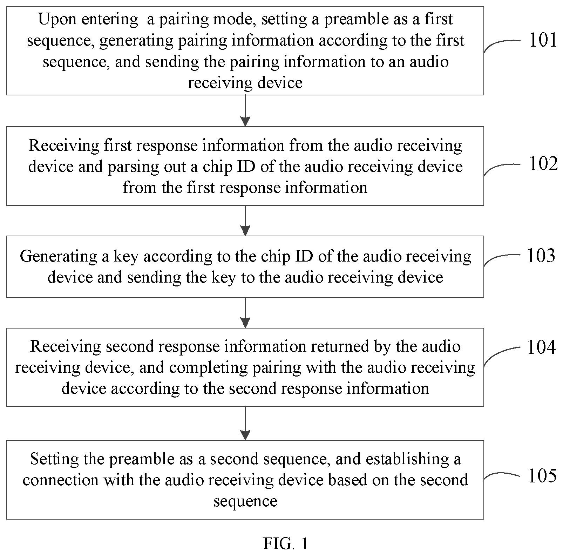

Referring to FIG. 1, a first flowchart diagram of a device connection method according to an embodiment of the invention is provided. A specific process of the device connection method is as follows:
101, upon entering a pairing mode, setting a preamble as a first sequence, generating pairing information according to the first sequence, and sending the pairing information to an audio receiving device.

In this embodiment, the device connection method is applied to an audio transmitting device and is configured to establish pairing and connection with at least one audio receiving device, thereby forming an audio transmission system. The audio transmission system may adopt a one-to-one relationship (one audio transmitting device corresponding to one audio receiving device) or one-to-many relationship (one audio transmitting device corresponding to a plurality of audio receiving devices). Wherein the audio transmitting device may serve as the master device, and the audio receiving device may serve as the slave device. The device connection method provided by this embodiment of the invention is based on Ultra Wide Band (UWB) technology, which has advantages such as low system complexity, low power spectral density of the transmitted signal, insensitivity to audio channel fading, low interception capability, and high positioning accuracy. UWB technology is particularly suitable for high-speed wireless access in dense multipath environments such as indoor scenarios. Accordingly, devices connected using the method disclosed herein can achieve high-level, high-fidelity, and low-latency wireless audio transmission via UWB technology.

In this embodiment, the audio transmitting device may first enter a pairing mode, and further set a preamble as a first sequence. Specifically, the preamble may be configured as a first sequence for pairing, for example set to 30. The preamble constitutes a sequence of signals transmitted prior to the valid signal, and is configured to alert a receiving chip (which is a UWB chip) of the receiving device that an income valid signal, so as to prevent loss of the valid signal. More specifically, the preamble assists the receiving chip in performing frequency synchronization and automatic gain control.

Furthermore, the step of generating pairing information based on the first sequence and sending the pairing information to the audio receiving device may include: acquiring a first audio channel currently allocated by the audio transmitting device, and a chip ID of the audio transmitting device (which is also a chip ID of a UWB chip of the audio transmitting device); integrating the first audio channel, the chip ID of the audio transmitting device, and the first sequence into pairing information; and sending the pairing information to the audio receiving device. The chip ID of the audio transmitting device may be an Extended Unique Identifier (EUI ) of the chip. Each chip has a unique EUI, such that pairing information can be generated based on the chip EUI, the first audio channel, and the preamble. Furthermore, the preamble can be obtained through the index related to the UWB underlying audio channel, and this embodiment will not elaborate further on this.

102, receiving first response information from the audio receiving device and parsing out a chip ID of the audio receiving device from the first response information.

In this embodiment, after receiving the pairing information, the slave device may record the master device chip ID information and send the received master device chip ID and the slave device chip ID back to the master device. If no pairing information is received, the slave device continues to wait for reception. Specifically, the master device chip ID and the slave device chip ID may be integrated into an Acknowledgment (ACK), i.e., the first response information, and returned to the master device. The ACK, also referred to as an acknowledgment message, is part of a communication protocol in a computer network. It is a message sent by a device or process, i.e., a message sent by the slave device, to inform the master device that the information has been successfully received. After receiving the ACK, the master device can parse out the audio receiving device chip ID, i.e., the slave device chip ID, from the ACK.

103, generating a key according to the chip ID of the audio receiving device and sending the key to the audio receiving device.

In this embodiment, the key may be generated by combining the audio receiving device chip ID with a random number. Specifically, after receiving the ACK carrying the slave device EUI from the slave device, the master device may perform a combination operation on the slave device EUI and the random number to obtain the key and send the key to the slave device. It should be noted that if the master device does not receive the ACK, the master device may continue to send the pairing information and wait to receive the ACK from the slave device.

104, receiving second response information returned by the audio receiving device, and completing pairing with the audio receiving device according to the second response information.

Specifically, the slave device waits to receive the key from the master device. If the key is received, the slave device stores the pairing ID (i.e., the pairing information) and key in flash memory, and then sends an ACK carrying the key (i.e., the second response information) to the master device. If the key is not received, the slave device continues to send an ACK carrying its own EUI, and waits to receive the key.

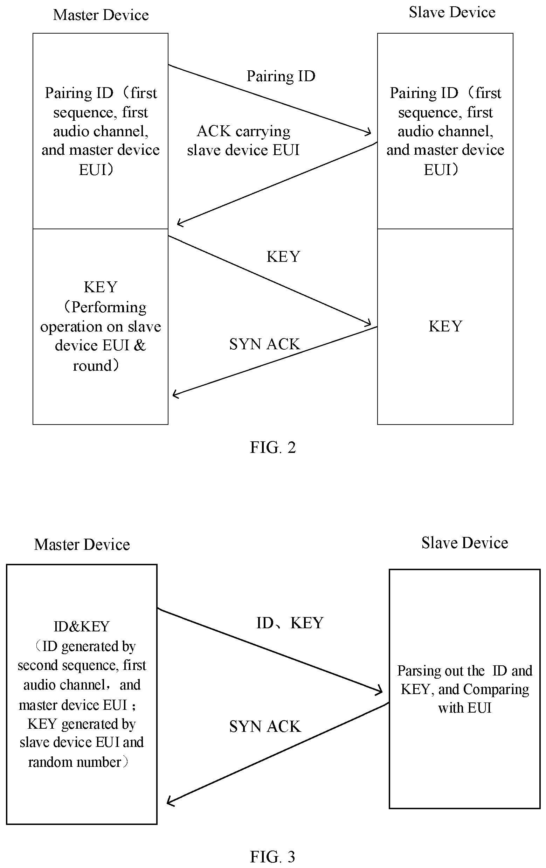

The master device receives the ACK for the key from the slave device, i.e., the second response information. Upon receiving the ACK for the key, the master device may configure a first audio channel and store the key, and then set the preamble as the one for transmitting audio data, for example, set to 29. The pairing process between the master device and the slave device can be referred to FIG. 2. In these embodiments, the master device may pair with one slave device or with the plurality of slave devices. When it is necessary to pair with multiple slaves, the above steps may be repeated to sequentially pair with other slave devices, which will not be elaborated in detail in this embodiment.

105, setting the preamble as a second sequence, and establishing a connection with the audio receiving device based on the second sequence.

In this embodiment, when connecting to a paired audio receiving device, the audio transmitting device may scan an unused preamble in current environment to serve as the second sequence; generate connection information based on the second sequence and send the connection information to the audio receiving device; and receive a third response information from the audio receiving device, and establish connection with the audio receiving device based on the third response information. The audio transmitting device further allocates a second audio channel to the audio receiving device.

Specifically, after being powered on and paired, the master and slave devices form an audio transmission system. The connection process between the master device and slave device may be referred to FIG. 3. When connection is required, the master device may first scan and set the unused preamble in the environment, while the slave device can set the preamble to the value stored in flash memory. If the signal strength is satisfactory, the slave device waits to receive the connection information. If no connection information is received after a period of time, the slave device cyclically sets the preamble in a list and waits to receive the connection information.

Furthermore, after setting the preamble as the second sequence, the master device may send connection information, which may include the currently set preamble (i.e., the second sequence), the current audio channel (i.e., the first audio channel), the master device EUI, and key. After receiving the connection information sent by the master device, the slave device can parse the connection information and determine whether the connection information matches the stored master device EUI and the slave device EUI. If the conditions are satisfied, the slave device may send the stored ID information (including the second sequence, the first audio channel, and the master device EUI) as an ACK (i.e., the third response information); otherwise, the slave device continues to wait to receive the correct connection information. After receiving the ACK, the master device stores the current preamble and the first audio channel; otherwise, the master device continues to send the connection information and waits to receive the ACK from the slave device. Upon completing the connection process, the master device may transmit audio data on the second audio channel corresponding to the connected slave device(s). The slave device determines, based on the second audio channel used during connection, whether the received audio data corresponds to the second audio channel to which it is connected, and then perform subsequent audio data reception processing.

For example, assume that the master device is paired with seven slave devices, and only three slave devices in the stored records are powered on, corresponding to first audio channels 1, 4, and 6. In each cycle, the master device sequentially connects to each slave device according to time slots. After connection is established, the master device transmits audio data corresponding to the first audio channel. For unconnected audio channels, the master device continues to send connection information until connection is completed. As time increases, the polling interval for unconnected audio channels extended. After the master device connects to the slave devices corresponding to first audio channels 1, 4, and 6, the channel numbers of the actually connected first audio channels are set to 1, 2, and 3 in sequence. Unconnected first audio channels initially send the connection information once per cycle but then send the connection information once every several cycles, so as to improve the efficiency of actual data processing. In other words, as time increases, the polling interval for unconnected first audio channels is extended, the actually connected first audio channels are reassigned with channel numbers according to the connection order (i.e., the channel numbers of the second audio channels), thereby improving the audio processing efficiency of the connected devices. That is, when the plurality of audio receiving devices exist, the step of allocating a second audio channel to the audio receiving device may include: determining a plurality of first audio channels corresponding to all successfully paired audio receiving devices; and determining the second audio channels from the plurality of first audio channels based on the connection order of the audio receiving devices.

It should be noted that in the same system, only devices with the same audio channel and the same preamble can receive data. That is, only paired slave devices can synchronize and parse audio data with the master device, thereby improving the anti-interference capability of the system in multi-channel scenarios.

As described above, the device connection method provided by the embodiments of the invention enables the audio transmitting device to enter a pairing mode, set the preamble as a first sequence, generate pairing information based on the first sequence and send the pairing information to an audio receiving device, receive first response information from the audio receiving device, parse out the chip ID of the audio receiving device from the first response information, generate a key based on the chip ID of the audio receiving device and send the key to the audio receiving device, receive second response information from the audio receiving device, complete pairing with the audio receiving device based on the second response information, set the preamble as the second sequence, and connect to the audio receiving device by using the second sequence. The solution provided by the embodiments of the invention realizes pairing and connection with at least one audio receiving device via the plurality of responses. After the plurality of audio receiving devices are connected, the plurality of audio receiving devices can receive audio data from respective second audio channels sequentially according to channel numbers of the second audio channels allocated by the audio transmitting device, thereby improving the stability of device connection. Furthermore, in multi-channel audio transmission, the audio data is transmitted synchronously without mutual interference, thereby achieving strong anti-interference capability.

According to the method described in the preceding embodiments, further details are provided below.

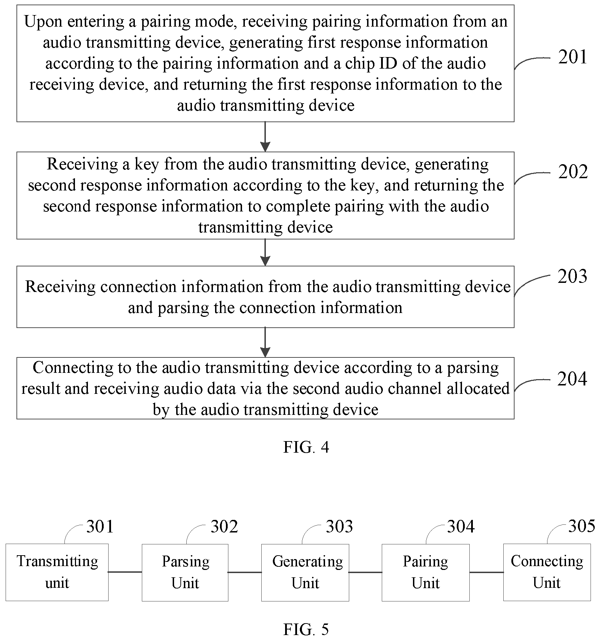

Referring to FIG. 4, a second flowchart diagram of the device connection method is provided in this embodiment of the invention. In this embodiment, the device connection method is applied to the audio receiving device. The device connection method includes:
201, upon entering a pairing mode, receiving pairing information from an audio transmitting device, generating first response information according to the pairing information and a chip ID of the audio receiving device, and returning the first response information to the audio transmitting device.

In this embodiment, the device connection method enables the audio receiving device to complete pairing and connection with the audio transmitting device, thereby forming an audio transmission system.

Furthermore, after receiving the pairing information from the audio transmitting device, the device connection method may further include: acquiring and storing the first audio channel included in the pairing information and the chip ID of the audio transmitting device. The chip ID of the audio transmitting device may be, for example the chip EUI.

202, receiving a key from the audio transmitting device, generating second response information according to the key, and returning the second response information to complete pairing with the audio transmitting device.

For example, the audio receiving device waits to receive the key from the audio transmitting device. If the key is received, the audio receiving device store the paired ID (i.e., pairing information) and key in the flash memory, and then sends an ACK carrying the key, i.e., the second response information to the audio transmitting device, so as to complete pairing with the audio transmitting device. If the key is not received, the audio receiving device continues to send an ACK carrying EUI of the audio receiving device, and waits to receive the key.

203, receiving connection information from the audio transmitting device and parsing the connection information.

204, connecting to the audio transmitting device according to a parsing result and receiving audio data via the second audio channel allocated by the audio transmitting device.

In this embodiment, the connection information may include the currently configured preamble, current audio channel (i.e., the first audio channel), master device EUI, key of the audio transmitting device, etc. After receiving the connection information from the master device, the slave device can parse the connection information and determine whether the connection information matches the stored master device EUI and slave device EUI. If the conditions are satisfied, the slave device may send the stored paired ID as the ACK, i.e., the third response information; otherwise, the slave device continues to wait to receive the correct connection information. That is, the step of connecting to the audio transmitting device based on the parsing result may include: if the chip ID included in the connection information matches the stored chip ID of the audio transmitting device, generating the third response information and return the third response information to connect to the audio transmitting device; if the chip ID included in the connection information does not match the stored chip ID of the audio transmitting device, continuing to receive connection information in a next polling cycle. After the connection process is completed, the master device may transmit audio data corresponding to the second audio channel(s) according to the connected slave device(s).

As described above, the device connection method provided by the embodiments of the invention includes: upon entering the pairing mode, receiving the pairing information from the audio transmitting device, generating and returning the first response information based on the pairing information and the chip ID of the audio receiving device, receiving the key from the audio transmitting device, generating and returning the second response information based on the key to complete pairing with the audio transmitting device, receiving the connection information from the audio transmitting device, parsing the connection information, connecting to the audio transmitting device based on the parsing result, and receiving audio data via the second audio channel allocated by the audio transmitting device. The device connection method provided by the embodiments of the invention realizes pairing and connection with the audio transmitting device via multiple responses. After connection, the audio receiving devices can sequentially receive audio data of respective second audio channels according to the channel numbers of the second audio channels allocated by the audio transmitting device, thereby improving the stability of device connection. Furthermore, in multi-channel audio transmission, the audio data is transmitted synchronously without mutual interference, thereby achieving strong anti-interference capability.

In one embodiment, the invention further provides a multi-channel reception synchronization method applied to a multi-channel reception synchronization system. In the multi-channel reception synchronization system, audio data is transmitted by one audio transmitting device, and a plurality of audio receiving devices receive audio data sequentially from respective allocated audio channels according to channel numbers of the allocated audio channels. The method includes:

When connecting to the audio receiving devices, the audio transmitting device allocates channel numbers of the audio channels to the audio receiving devices in the order of connection, and after the connection is completed, transmit audio data via each audio channel to the audio receiving devices according to the channel numbers of the audio channels;

The audio transmitting device sends connection information to paired audio receiving devices that are not powered on or/and not connected to the audio transmitting device, and waits for connection establishment;

After a paired audio receiving device is powered on and connected to the audio transmitting device, the audio transmitting device sends the audio data of the corresponding audio channel to the audio receiving device according to the channel number of the audio channel allocated during connection, thereby realizing dynamic allocation of channel numbers of the audio channels and synchronous reception processing of multi-channel audio data.

To implement the above method, embodiments of the invention further provide a device connection module, which may be configured to transmit audio data and may be specifically integrated into terminal devices such as mobile phones and tablet computers, and the like.

For example, as shown in FIG. 5, a first structural diagram of the device connection module provided in an embodiment of the invention. The device connection module may include:
A transmitting unit 301, configured to upon entering the pairing mode, set a preamble as a first sequence, generate pairing information based on the first sequence, and send the pairing information to the audio receiving device;
A parsing unit 302, configured to receive first response information from the audio receiving device and parse out a chip ID of the audio receiving device from the first response information;
A generating unit 303, configured to generate a key according to the chip ID of the audio receiving device and send the key to the audio receiving device;
A pairing unit 304, configured to receive second response information returned by the audio receiving device, and complete pairing with the audio receiving device according to the second response information;
A connecting unit 305, configured to set the preamble as a second sequence, and establish a connection with the audio receiving device based on the second sequence.

The device connection module provided in the embodiments of the invention enables the audio transmitting device to enter a pairing mode, set the preamble as a first sequence, generate pairing information based on the first sequence and send the pairing information to an audio receiving device, receive first response information from the audio receiving device, parse out the chip ID of the audio receiving device from the first response information, generate a key based on the chip ID of the audio receiving device and send the key to the audio receiving device, receive second response information from the audio receiving device, complete pairing with the audio receiving device based on the second response information, set the preamble as the second sequence, and connect to the audio receiving device using the second sequence. The solution provided by the embodiments of the invention realizes pairing and connection with at least one audio receiving device via the plurality of responses. After the plurality of audio receiving devices are connected, the plurality of audio receiving devices can receive audio data from respective audio channels sequentially according to the channel numbers of the audio channels allocated by the audio transmitting device, thereby improving the stability of device connection. Furthermore, in multi-channel audio transmission, the audio data is transmitted synchronously without mutual interference, thereby achieving strong anti-interference capability.

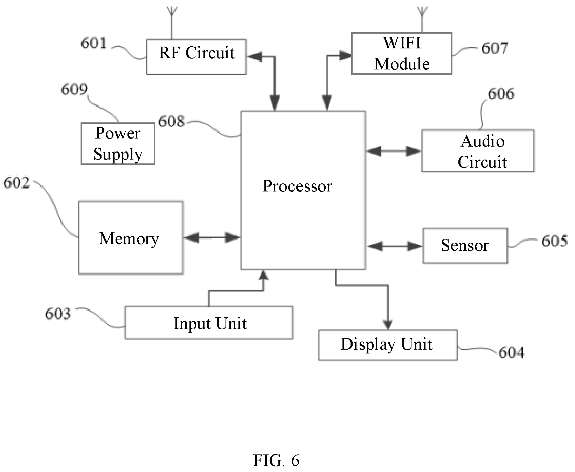

Embodiments of the invention further provide a terminal. As illustrated in FIG. 6, the terminal may include a Radio Frequency (RF) circuit 601, a memory 602 including one or more computer-readable storage media, an input unit 603, a display unit 604, a sensor 605, an audio circuit 606, a Wireless Fidelity (WIFI) module 607, a processor 608 including one or more processing cores, and a power supply 609. Those skilled in the art will appreciate that the terminal structure illustrated in FIG. 6 is not intended to be limiting, and the terminal may include more or fewer components than those illustrated, combine certain components, or employ a different arrangement of components. In particular:
The RF circuit 601 is configured to receive and transmit signals during information reception and communication, and in particular, to receive downlink information from a base station and deliver the downlink information to one or more processors 608 for processing, and to transmit uplink data to the base station. The RF circuit 601 typically includes, but is not limited to, an antenna, at least one amplifier, a tuner, one or more oscillators, a Subscriber Identity Module (SIM) card, a transceiver, a coupler, a Low Noise Amplifier (LNA), and a duplexer. In addition, the RF circuit 601 may communicate with networks and other devices via wireless communication. The wireless communication may support any communication standard or protocol, including but not limited to Global System for Mobile Communication (GSM), General Packet Radio Service (GPRS), Code Division Multiple Access (CDMA), Wideband Code Division Multiple Access (WCDMA), Long Term Evolution (LTE), email, and Short Messaging Service (SMS).

The memory 602 is configured to store software programs and modules, and the processor 608 executes various functional applications and information processing by running the software programs and modules stored in the memory 602. The memory 602 mainly includes a program storage area and a data storage area. The program storage area may store an operating system and at least one application required for implementing a corresponding function (such as a sound playback function, an image playback function, etc.). The data storage area may store data generated according to usage of the terminal (such as audio data, a phone book, etc.). In addition, the memory 602 may include high-speed random access memory, and may also include non-volatile memory, such as at least one disk storage device, a flash memory device, or other non-volatile solid-state storage devices. Correspondingly, the memory 602 may further include a memory controller configured to provide the processor 608 and the input unit 603 with access to the memory 602.

The input unit 603 is configured to receive input digital or character information and generate signal inputs related to user settings and function control, such as those from a keyboard, mouse, joystick, optical input device, or trackball. Specifically, in one embodiment, the input unit 603 may include a touch-sensitive surface and other input devices. The touch-sensitive surface, also referred to as a touch display or touchpad, is configured to collect touch operations performed by a user on or near the surface (such as operations performed by a user using a finger, stylus, or any other suitable object or accessory on or near the touch-sensitive surface) and drive a corresponding connection device according to a preset program. Optionally, the touch-sensitive surface may include two components: a touch detection device and a touch controller. The touch detection device detects a user's touch position and signals generated by the touch operation, and transmits the signals to the touch controller. The touch controller receives touch information from the touch detection device, converts the touch information into touch point coordinates, and transmits the coordinates to the processor 608. The touch controller may also receive commands from the processor 608 and execute the commands. In addition, the touch-sensitive surface may be implemented using various types of technologies, including resistive, capacitive, infrared, and surface acoustic wave technologies. In addition to the touch-sensitive surface, the input unit 603 may further include other input devices. Specifically, such other input devices may include, but are not limited to, one or more of a physical keyboard, function keys (such as volume control keys, power keys, and the like), a trackball, a mouse, and a joystick.

The display unit 604 is configured to display information input by a user or provided to the user, as well as various graphical user interfaces of the terminal, which may be formed by graphics, text, icons, videos, and any combination thereof. The display unit 604 may include a display panel, which may be optionally implemented using a liquid crystal display (LCD), an Organic Light-Emitting Diode (OLED), or other suitable configurations. Furthermore, the touch-sensitive surface may cover the display panel. When the touch-sensitive surface detects a touch operation on or near the surface, it transmits relevant information to the processor 608 to determine a type of the touch event. The processor 608 then provides corresponding visual output on the display panel according to the type of the touch event. Although the touch-sensitive surface and the display panel are illustrated as two separate components for implementing input and output functions in FIG. 6, in some embodiments, the touch-sensitive surface and the display panel may be integrated to implement input and output functions.

The terminal may further include at least one sensor 605, such as an optical sensor, a motion sensor, and/or other sensors. Specifically, the optical sensor may include an ambient light sensor and a proximity sensor. The ambient light sensor is configured to adjust the brightness of the display panel based on ambient light intensity, while the proximity sensor is configured to turn off the display panel and/or the backlight when the terminal is moved close to the ear. As one type of motion sensor, a gravity acceleration sensor can detect acceleration magnitude in various directions (typically three axes), and detect a magnitude and direction of gravity when stationary. It may be applied to applications for recognizing the posture of the terminal like mobile phone (such as landscape/portrait mode switching, related games, magnetometer orientation calibration) and functions related to vibration recognition (such as a pedometer, tapping), etc. Other sensors that the terminal may further be provided with include, but are not limited to, a gyroscope, a barometer, a hygrometer, a thermometer, and an infrared sensor, which are not elaborated herein. The audio circuit 606, a speaker, and a microphone provide an audio interface between a user and the terminal. The audio circuit 606 is configured to transmit an electrical signal converted from received audio data to the speaker, which converts the electrical signal into a sound signal for output. On the other hand, the microphone converts a collected sound signal into an electrical signal, which is received by the audio circuit 606 and converted into audio data. The audio data is then output to the processor 608 for processing, and transmitted to another terminal via the RF circuit 601, or output to the memory 602 for further processing. The audio circuit 606 may also include an earphone jack to enable communication between a peripheral headphone and the terminal.

WIFI is a short-range wireless transmission technology. The terminal may receive and transmit emails, browse web pages, and access streaming media via the WIFI module 607, thereby providing the users with wireless broadband Internet access. Although the WIFI module 607 is illustrated in FIG. 6, it is not an essential component of the terminal and may be omitted as required without departing from the scope of the invention.

The processor 608 is the control center of the terminal, and connects various components of the terminal via various interfaces and circuits. By running or executing software programs and/or modules stored in the memory 602 and invoking data stored in the memory 602, the processor 608 implements various functions of the terminal and processes data, so as to implement overall monitoring of the terminal. Optionally, the processor 608 may include one or more processing cores. Preferably, the processor 608 may integrate an application processor and a modem processor, wherein the application processor is mainly configured to process an operating system, a user interface, applications, and the like, and the modem processor is mainly configured to process wireless communication. It will be appreciated that the modem processor may alternatively not be integrated into the processor 608.

The terminal further includes a power supply 609 (e.g., a battery) for supplying power to the various components. Preferably, the power supply may be logically connected to the processor 608 via a power management system, so as to implement functions such as charging management, discharging management, and power consumption management via the power management system. The power supply 609 may also include any components such as one or more DC or AC power supply, a recharging system, a power failure detection circuit, a power converter or inverter, and a power status indicator.

Although not shown, the terminal may further include components such as a camera and a Bluetooth module, which are not described in detail herein. Specifically, in this embodiment, the processor 608 in the terminal loads executable files corresponding to processes of one or more applications into the memory 602 according to follows instructions, and runs the applications stored in the memory 602 via the processor 608 to implement various functions as follows:
Upon entering a pairing mode, setting a preamble as a first sequence, generating pairing information according to the first sequence, and sending the pairing information to an audio receiving device;
Receiving first response information from the audio receiving device and parsing out a chip ID of the audio receiving device from the first response information;
Generating a key according to the chip ID of the audio receiving device and sending the key to the audio receiving device;
Receiving second response information returned by the audio receiving device, and completing pairing with the audio receiving device according to the second response information;
Setting the preamble as a second sequence, and establishing a connection with the audio receiving device based on the second sequence.

In the foregoing embodiments, each embodiment places emphasis on different aspects. For portions not described in detail in a given embodiment, reference may be made to the detailed descriptions of the device connection method provided above, which are not repeated herein.

From the above, it can be seen that in the terminal of the embodiments of the invention, the audio transmitting device may enter a pairing mode, set the preamble as a first sequence, generate pairing information based on the first sequence and send the pairing information to an audio receiving device, receive first response information from the audio receiving device, parse out the chip ID of the audio receiving device from the first response information, generate a key based on the chip ID of the audio receiving device and send the key to the audio receiving device, receive second response information from the audio receiving device, complete pairing with the audio receiving device based on the second response information, set the preamble as the second sequence, and connect to the audio receiving device by using the second sequence. The solution provided by the embodiments of the invention realizes pairing and connection with at least one audio receiving device via the plurality of responses. After the plurality of audio receiving devices are connected, the plurality of audio receiving devices can receive audio data from respective audio channels sequentially according to channel numbers of the audio channels allocated by the audio transmitting device, thereby improving the stability of device connection. Furthermore, in multi-channel audio transmission, the audio data is transmitted synchronously without mutual interference, thereby achieving strong anti-interference capability.

Those skilled in the art can understand that all or part of the steps in the various methods described in the above embodiments may be completed by instructions or by controlling relevant hardware via such instructions. The instructions may be stored in a computer-readable storage medium and loaded and executed by a processor.

Therefore, the embodiments of the invention provide a computer-readable storage medium storing a plurality of instructions that can be loaded by a processor to perform the steps in any of the device connection methods provided in the embodiments of the invention. For example, the instructions can execute the following steps:
Upon entering a pairing mode, setting a preamble as a first sequence, generating pairing information according to the first sequence, and sending the pairing information to an audio receiving device;
Receiving first response information from the audio receiving device and parsing out a chip ID of the audio receiving device from the first response information;
Generating a key according to the chip ID of the audio receiving device and sending the key to the audio receiving device;
Receiving second response information returned by the audio receiving device, and completing pairing with the audio receiving device according to the second response information;
Setting the preamble as a second sequence, and establishing a connection with the audio receiving device based on the second sequence.

For specific implementations of the operations described above, reference may be made to the previous embodiments, and details are not repeated herein.

The storage medium may include Read-Only Memory (ROM), Random Access Memory (RAM), a magnetic disk, an optical disk, or the like.

The instructions stored in the storage medium can execute the steps in any of the device connection methods provided in the embodiments of the invention, and thus can achieve the beneficial effects achievable by any of such device connection methods. For details, reference may be made to the previous embodiments, which are not repeated herein.

The foregoing provides a detailed description of a device connection method, a terminal, and a computer-readable storage medium provided in the embodiments of the invention. Specific examples are used herein to explain the principles and implementations of the invention. The descriptions of the foregoing embodiments are merely intended to facilitate understanding of the methods and core concepts of the invention. Meanwhile, those skilled in the art may make modifications to the specific implementations and application scope based on the concepts of the invention. In summary, the content of this specification shall not be construed as a limitation on the invention.

## Claims

1. A device connection method, applied to an audio transmitting device, comprising:
upon entering a pairing mode, setting a preamble as a first sequence, generating pairing information according to the first sequence, and sending the pairing information to an audio receiving device;
receiving first response information from the audio receiving device and parsing out a chip ID of the audio receiving device from the first response information;
generating a key according to the chip ID of the audio receiving device and sending the key to the audio receiving device;
receiving second response information returned by the audio receiving device, and completing pairing with the audio receiving device according to the second response information;
setting the preamble as a second sequence, and establishing a connection with the audio receiving device based on the second sequence.

2. The device connection method according to claim 1, wherein generating the pairing information according to the first sequence, and sending the pairing information to the audio receiving device comprises:
obtaining a currently allocated first audio channel and a chip ID of the audio transmitting device;
integrating the first audio channel, the chip ID of the audio transmitting device, and the first sequence into pairing information, and sending the pairing information to the audio receiving device.

3. The device connection method according to claim 1, wherein generating the key according to the chip ID of the audio receiving device and sending the key to the audio receiving device comprises:
performing a combined operation on the chip ID of the audio receiving device and a random number to obtain the key, and sending the key to the audio receiving device.

4. The device connection method according to claim 2, wherein setting the preamble as the second sequence, and establishing the connection with the audio receiving device based on the second sequence, comprises:
scanning an unused preamble in current environment as the second sequence;
generating connection information according to the second sequence and sending the connection information to the audio receiving device;
receiving third response information from the audio receiving device and establishing the connection with the audio receiving device according to the third response information; and
allocating a second audio channel to the audio receiving device.

5. The device connection method according to claim 4, wherein there are a plurality of audio receiving devices, and the step of allocating the second audio channels to the audio receiving devices comprises:
determining a plurality of first audio channels corresponding to successfully paired audio receiving devices;
determining the second audio channels from the plurality of first audio channels according to a connection order of the audio receiving devices.

6. A device connection method, applied to an audio receiving device, comprising:
upon entering a pairing mode, receiving pairing information from an audio transmitting device, generating first response information according to the pairing information and a chip ID of the audio receiving device, and returning the first response information to the audio transmitting device;
receiving a key from the audio transmitting device, generating second response information according to the key, and returning the second response information to complete pairing with the audio transmitting device;
receiving connection information from the audio transmitting device and parsing the connection information; and
connecting to the audio transmitting device according to a parsing result and receiving audio data via the second audio channel allocated by the audio transmitting device.

7. The device connection method according to claim 6, wherein after receiving the pairing information from the audio transmitting device, the device connection method further comprises:
obtaining and storing a first audio channel and a chip ID of the audio transmitting device in the pairing information.

8. The device connection method according to claim 6, wherein connecting to the audio transmitting device according to the parsing result comprises:
when the chip ID included in the connection information is consistent with the stored chip ID of the audio transmitting device, generating third response information and returning the third response information to establish a connection with the audio transmitting device;
when the chip ID included in the connection information is inconsistent with the stored chip ID of the audio transmitting device, continuing to receive the connection information in a next polling cycle.

9. A terminal, wherein the terminal comprises:
a memory, configured to store an application processing program; and
a processor, configured to execute the application processing program to perform a device connection method according to any one of claims 1-8.

10. A computer-readable storage medium, being configured to store program instructions, wherein the program instructions are executed by a processor to perform a device connection method according to any one of claims 1-8.
